# EUROPEAN PATENT APPLICATION

(11) **EP 4 668 546 A1**
(43) Date of publication of application: **24.12.2025**
(21) Application number: 23932857.8
(22) Date of filing: 22.12.2023
(51) Int. Cl.: H02K 1/276, H02K 21/02, H02K 21/46

(54) **ROTOR STRUCTURE AND MOTOR**

(30) Priority: 10.04.2023 CN 202310383984
(71) Applicant: Gree Electric Appliances, Inc. of Zhuhai, Zhuhai, Guangdong 519070 (CN)
(72) Inventor: CHEN, Bin, Zhuhai, Guangdong 519070 (CN); XIAO, Yong, Zhuhai, Guangdong 519070 (CN); HU, Yusheng, Zhuhai, Guangdong 519070 (CN); SHI, Jinfei, Zhuhai, Guangdong 519070 (CN); LI, Xia, Zhuhai, Guangdong 519070 (CN); LI, Ying, Zhuhai, Guangdong 519070 (CN)
(74) Representative: Zacco GmbH
(86) International application number: PCT/CN2023/141285
(87) International publication number: WO 2024/212586

(57) **Abstract**

The present disclosure provides a rotor structure and a motor. The rotor structure includes: a rotor core including a plurality of axially stacked magnetic laminations, wherein under one pole of the rotor core, a plurality of conductor slots and multi-layer permanent magnet slots are disposed; and magnet steels, disposed in the permanent magnet slots. The rotor core includes a d-axis and a q-axis. Under one pole, the d-axis is located on a symmetrical centerline of the pole, and the q-axis is located on a symmetrical centerline between adjacent poles, the conductor slots including d-axis conductor slots and q-axis conductor slots. Under the same pole, the number of d-axis conductor slots located on the side of the magnet steels close to a rotor outer circumference is at least two, and a total length L5 of all the d-axis conductor slots in a direction perpendicular to the d-axis is greater than a length L1 of each of the magnet steels in the direction perpendicular to the d-axis, with 1.2 ≤ L5 / L1 ≤ 2. According to the present disclosure, the rotor structure can increase pull-in torque of the motor and enhance the starting capability of the motor, while also strengthening the protection of magnet steels by conductor slots, thereby enhancing demagnetization resistance and operational reliability of the motor.

## Description

The present application claims priority to Chinese Patent Application No. 202310383984.5, titled "ROTOR STRUCTURE AND MOTOR", filed on April 10, 2023.

### Technical Field

The present disclosure relates to the technical field of motors, and particularly, to a rotor structure and a motor.

### Background

A self-starting permanent magnet-assisted synchronous reluctance motor, on a basis of a permanent magnet-assisted synchronous reluctance motor, incorporates advantages of an asynchronous motor, achieves self-starting through asynchronous torque generated by rotor bars, and realizes constant-speed operation through permanent magnet torque and reluctance torque.

Compared with the asynchronous motor, the self-starting permanent magnet-assisted synchronous reluctance motor operates at synchronous rotational speed during normal operation without rotor copper loss, thereby achieving higher efficiency. The magnet steels provide a stronger magnetic field, enabling the same specification to deliver higher power and thus higher power density. Furthermore, the rotor of the self-starting permanent magnet-assisted synchronous reluctance motor is equipped with rotor windings, retaining the asynchronous starting capability of the asynchronous motor, thereby enabling it to functionally replace the asynchronous motor.

Compared with a permanent magnet synchronous motor with asynchronous starting, the self-starting permanent magnet-assisted synchronous reluctance motor uses less permanent magnet material, resulting in lower motor cost. However, the self-starting permanent magnet-assisted synchronous reluctance motor is directly connected with a power grid for starting. During the starting process, the current is large, producing a strong resultant magnetic field acting on the magnet steels, thereby posing a risk of irreversible demagnetization of the magnet steels.

### Summary

A main object of the present disclosure is to provide a rotor structure and a motor that are able to increase pull-in torque of the motor and enhance the starting capability of the motor, while also strengthening the protection of magnet steels by conductor slots, thereby enhancing demagnetization resistance and operational reliability of the motor.

To achieve the object above, according to one aspect of the present disclosure, there is provided a rotor structure, including:
a rotor core, the rotor core including a plurality of axially stacked magnetic laminations, wherein under one pole of the rotor core, a plurality of conductor slots and multi-layer permanent magnet slots are disposed, the conductor slots being distributed along an outer periphery of the rotor core; and
magnet steels, disposed in the permanent magnet slots, wherein
the rotor core includes a d-axis and a q-axis, and under one pole, the d-axis is located on a symmetrical centerline of the pole, the q-axis is located on a symmetrical centerline between adjacent poles, the permanent magnet slots being spaced along the d-axis, the conductor slots including d-axis conductor slots and q-axis conductor slots, the d-axis conductor slots being located on a side of the magnet steels close to a rotor outer circumference of the rotor core, the q-axis conductor slots being located at two ends of each of the permanent magnet slots and extending along a direction of ends of the permanent magnet slots close to the q-axis conductor slots; and
under the same pole, a number of the d-axis conductor slots located on the side of the magnet steels close to the rotor outer circumference is at least two, and a total length L5 of all the d-axis conductor slots in a direction perpendicular to the d-axis is greater than a length L1 of each of the magnet steels in the direction perpendicular to the d-axis, with 1.2 ≤ L5 / L1 ≤ 2.

In some embodiments, a spacing between two adjacent ones of the d-axis conductor slots in the direction perpendicular to the d-axis is w4, and a width of each of the magnet steels along the d-axis is w1, with w4 ≥ 2w1; and/or, a relationship between a maximum width w5 of the d-axis conductor slots in the d-axis and a width w1 of each of the magnet steels along the d-axis satisfies w5 ≥ 2w1.

In some embodiments, under the same pole, the magnet steels are arranged in two or more layers, a width of a magnet steel located at an outermost layer along the d-axis being greater than or equal to a width of magnet steels in other layers along the d-axis, and a difference in the length L1 of the magnet steels in each layer in the direction perpendicular to the d-axis is within 30%.

In some embodiments, the magnet steels have a length L1 in the direction perpendicular to the d-axis, and a length L2 of the q-axis conductor slots along the q-axis has a ratio L2 / L1 = k2 with respect to a length L1 of a corresponding magnet steel in a same layer in the direction perpendicular to the d-axis, with k2 gradually decreasing along the d-axis in a direction toward the rotor outer circumference.

In some embodiments, at least part of the q-axis conductor slots have a length L2 along the q-axis that is greater than 0.8 times the length L1 of the corresponding magnet steel in the same layer in the direction perpendicular to the d-axis.

In some embodiments, each of the magnet steels has a width w1 along the d-axis, and a relationship between a width w2 of the q-axis conductor slots in the direction perpendicular to the q-axis and a width w1 of a corresponding magnet steel in a same layer along the d-axis satisfies w2 > w1.

In some embodiments, a relationship between w1 and w2 satisfies 1.2 ≤ w2 / w1 ≤ 2.

In some embodiments, in a cross-section perpendicular to a central axis of the rotor core, the permanent magnet slots are symmetric about the d-axis, each of the permanent magnet slots includes an arc segment and/or a straight segment and includes a middle portion perpendicular to the d-axis and two end portions parallel to the q-axis, each of the magnet steels is disposed in a middle portion of a corresponding permanent magnet slot, and portions of the corresponding permanent magnet slot at two ends of each of the magnet steels are filled with air.

In some embodiments, a width of the middle portion gradually increases from two ends of a corresponding magnet steel in a direction away from the corresponding magnet steel toward the junction with the two end portions to reach a width of the two end portions at the junction; and/or, a width of the middle portion along the d-axis is w3, and a width of the corresponding magnet steel along the d-axis is w1, with w3 ≥ w1.

In some embodiments, in the direction perpendicular to the d-axis, a length of an air portion of a permanent magnet slot located at an end of a corresponding magnet steelpermanent magnet slot decreases along the d-axis toward the rotor outer circumference.

In some embodiments, in the direction perpendicular to the d-axis, the length of the air portion of the permanent magnet slot located at the end of the corresponding magnet steel permanent magnet slotis L3, a length of the corresponding magnet steel in a same layer is L1, with L3 / L1 = k3, and k3 gradually decreases toward the rotor outer circumference.

In some embodiments, at least part of the permanent magnet slots are provided with the air portion at the end of the corresponding magnet steel, and the length L3 of the air portion in the direction perpendicular to the d-axis is greater than the length L1 of the corresponding magnet steel in the same layer in the direction perpendicular to the d-axis.

In some embodiments, a total length of a permanent magnet slot in a same layer as a corresponding magnet steel in the direction perpendicular to the d-axismagnet steel is L4, and a ratio k4 between L1 and L4 gradually increases toward the rotor outer circumference.

In some embodiments, a ratio k4 between a length L1 of a magnet steel in an innermost layer along the d-axis and a length L4 of a corresponding permanent magnet slot in the same layer satisfies 0.2 ≤ k4 ≤ 0.4, and toward the rotor outer circumference, an increase ratio of k4 between adjacent layers is greater than or equal to 1.25.

In some embodiments, a minimum distance between a magnet steel at an outermost layer on a side near the rotor outer circumference and the rotor outer circumference is r1, and a radius of the rotor outer circumference is R, with 0.18 ≤ r1 / R ≤ 0.33.

In some embodiments, each of the q-axis conductor slots has a length L2 along the q-axis, and a length L2 of a q-axis conductor slot at the outermost layer on the side near the rotor outer circumference satisfies 1 < r1 / L2 < 2.

In some embodiments, a central portion of a magnet steel at an outermost layer on a side near the rotor outer circumference projects toward the rotor outer circumference.

In some embodiments, end plates are disposed at two ends of the rotor core, each of the end plates having communication slots corresponding to and adapted to the conductor slots, the end plates covering two end portions of the permanent magnet slots, and an end plate of at least one end of the rotor core covering a part of a magnet steel at an outermost layer near the rotor outer circumference.

In some embodiments, the rotor structure further includes a short-circuit end ring that covers the conductor slots and electrically shorts the conductor slots, an outer periphery of the short-circuit end ring is circular, the short-circuit end ring includes an inner hole formed as a polygon defined by straight segments or by straight segments and arc segments, and under the same pole, a radial width of the short-circuit end ring varies at different positions from the d-axis to the q-axis, with a relationship between a minimum radial width r2 of the short-circuit end ring and a radius R of the rotor outer circumference satisfying 0.14 ≤ r2 / R ≤ 0.3.

In some embodiments, the rotor structure further includes a short-circuit end ring, end plates being disposed at two ends of the rotor core, the end plate being provided with communication slots corresponding to and adapted to the conductor slots, and the end plates covering the two end portions of the permanent magnet slots; wherein an end plate at one end of the rotor core covers part of a magnet steel at an outermost layer near the rotor outer circumference, and an end plate at the other end of the rotor core is positioned radially outside the magnet steel at the outermost layer near the rotor outer circumference; and the short-circuit end ring is disposed on the end plate and covers the communication slots, a structure of the short-circuit end ring is adapted to a structure of an end plate of a corresponding end, and a relationship between the minimum radial width r2 of the short-circuit end ring and a radius R of the rotor outer circumference satisfies 0.14 ≤ r2 / R ≤ 0.3.

According to another aspect of the present disclosure, there is provided a motor including a stator structure and the rotor structure described above, and the stator structure is sleeved over the rotor structure.

Applying the technical solution of the present disclosure, a rotor structure includes a rotor core, the rotor core including a plurality of axially stacked magnetic laminations, wherein under one pole of the rotor core, a plurality of conductor slots and multi-layer permanent magnet slots are disposed, the conductor slots being distributed along an outer periphery of the rotor core; and magnet steels, disposed in the permanent magnet slots. The rotor core includes a d-axis and a q-axis, and under one pole, the d-axis is located on a symmetrical centerline of the pole, the q-axis is located on a symmetrical centerline between adjacent poles, the permanent magnet slots being spaced along the d-axis, the conductor slots including d-axis conductor slots and q-axis conductor slots, the d-axis conductor slots being located on a side of the magnet steels close to a rotor outer circumference of the rotor core, the q-axis conductor slots being located at two ends of each of the permanent magnet slots and extending along a direction of ends of the permanent magnet slots close to the q-axis conductor slots. Under the same pole, a number of the d-axis conductor slots located on the side of the magnet steels close to the rotor outer circumference is at least two, and a total length L5 of all the d-axis conductor slots in a direction perpendicular to the d-axis is greater than a length L1 of each of the magnet steels in the direction perpendicular to the d-axis, with 1.2 ≤ L5 / L1 ≤ 2. A squirrel-cage asynchronous magnetic field generated by the conductor slots has a shielding effect against a demagnetizing magnetic field of an armature windings, that is, a cage magnetic field provides protection for the magnet steels. By arranging d-axis conductor slots on a side of an outermost magnet steels along the d-axis, close to the rotor outer circumference, a conductor slot area is able to be increased. With an adequate slot area, the conductor slots are not only able to increase pull-in torque of the motor and enhance the starting capability of the motor, while also strengthening the protection of magnet steels by conductor slots, thereby enhancing demagnetization resistance and operational reliability of the motor. Under one pole, at least two d-axis conductor slots are disposed on a side close to the rotor outer circumference along the d-axis direction. This configuration ensures that part of the magnetic field of the magnet steels enters the rotor d-axis, avoiding rotor magnetic saturation, increasing the magnet steel torque of the motor, and enhancing the torque output capability of the motor.

### Brief Description of the Drawings

The drawings, which constitute part of the present disclosure, are provided for a further understanding of the present disclosure. Exemplary embodiments of the present disclosure and the description thereof are intended to explain the present disclosure and do not constitute an undue limitation of the present disclosure. In the drawings:
FIG. 1 shows a structural dimension diagram of a rotor structure according to an embodiment of the present disclosure;
FIG. 2 shows a curve of a relationship between L2 / w2 and pull-in torque of a rotor structure according to an embodiment of the present disclosure;
FIG. 3 shows a schematic diagram of improvement of magnet steel demagnetization by an asynchronous magnetic field in a rotor structure according to an embodiment of the present disclosure;
FIG. 4 shows a curve of a relationship between remanence of magnet steels and w2 / w1 in a rotor structure according to an embodiment of the present disclosure;
FIG. 5 shows curves of a relationship between magnetic flux density of magnet steels in each layer and L5 / L1 in a rotor structure according to an embodiment of the present disclosure;
FIG. 6 shows a comparison diagram of magnetic flux densities of magnet steels between a motor according to an embodiment of the present disclosure and a motor of the related art;
FIG. 7 shows curves of a relationship between utilization rate of magnet steels in each layer and L3 / L1 in a rotor structure according to an embodiment of the present disclosure;
FIG. 8 shows a comparison diagram of temperature rise of magnet steels under different operating conditions between a motor according to an embodiment of the present disclosure and a motor of the related art;
FIG. 9 shows a magnetic flux density cloud diagram of magnet steels under heavy load in a rotor structure according to an embodiment of the present disclosure;
FIG. 10 shows a magnetic flux density cloud diagram of magnet steels under heavy load in a rotor structure of the prior art;
FIG. 11 shows a schematic structural diagram of a short-circuit end ring without an end plate in a rotor structure according to an embodiment of the present disclosure;
FIG. 12 shows an exploded schematic structural diagram of a short-circuit end ring without an end plate in a rotor structure according to an embodiment of the present disclosure;
FIG. 13 shows a first mating structure diagram between an end plate and a rotor core in a rotor structure according to an embodiment of the present disclosure;
FIG. 14 shows a second mating structure diagram between an end plate and a rotor core of a rotor structure according to an embodiment of the present disclosure;
FIG. 15 shows a mating structure diagram of a first end plate, a first end ring, and a rotor core in a rotor structure according to an embodiment of the present disclosure;
FIG. 16 shows a mating structure diagram of a second end plate, a second end ring, and a rotor core in a rotor structure according to an embodiment of the present disclosure;
FIG. 17 shows an exploded schematic structural diagram of a short-circuit end ring with an end plate in a rotor structure according to an embodiment of the present disclosure;
FIG. 18 shows a schematic structural diagram of a rotor structure according to another embodiment of the present disclosure;
FIG. 19 shows curves of a relationship between minimum torque and pull-in torque with respect to r1 / R in a rotor structure according to an embodiment of the present disclosure;
FIG. 20 shows a schematic diagram of a mating structure between a rotor structure and a stator structure of a motor according to an embodiment of the present disclosure;
FIG. 21 shows a comparison diagram of rotational speed curves during starting process between a motor according to an embodiment of the present disclosure and a motor of the related art;
FIG. 22 shows a comparison diagram of magnetic flux density of magnet steels during starting process between a motor according to an embodiment of the present disclosure and a motor of the related art;
FIG. 23 shows a comparison diagram of various torques between a motor according to an embodiment of the present disclosure and a motor of the related art;
FIG. 24 shows a comparison diagram of back electromotive force waveforms between a motor according to an embodiment of the present disclosure and a motor of the related art;
FIG. 25 shows a comparison diagram of current waveforms between a motor according to an embodiment of the present disclosure and a motor of the related art; and
FIG. 26 shows a comparison diagram of harmonic amplitudes between a motor according to an embodiment of the present disclosure and a motor of the related art.

The drawings above include the following reference numerals:
1. Rotor structure; 2. Rotor core; 3. Magnetic lamination; 4. Conductor slot; 41. q-axis conductor slot; 42. d-axis conductor slot; 5. Permanent magnet slot; 6. Magnet steel; 7. Rotor shaft hole; 8. Stator structure; 9. Short-circuit end ring; 101. First end plate; 102. Second end plate; 111. First end ring; 112. Second end ring.

### Detailed Description of the Embodiments

It is to be noted that, unless there is a conflict, embodiments of the present disclosure and features in the embodiments may be combined with each other. The present disclosure is described in detail below with reference to the drawings and in conjunction with the embodiments.

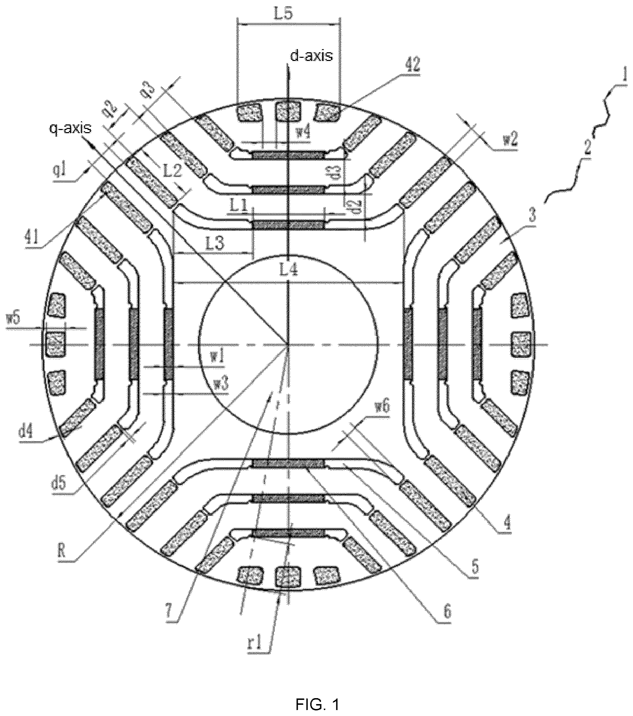

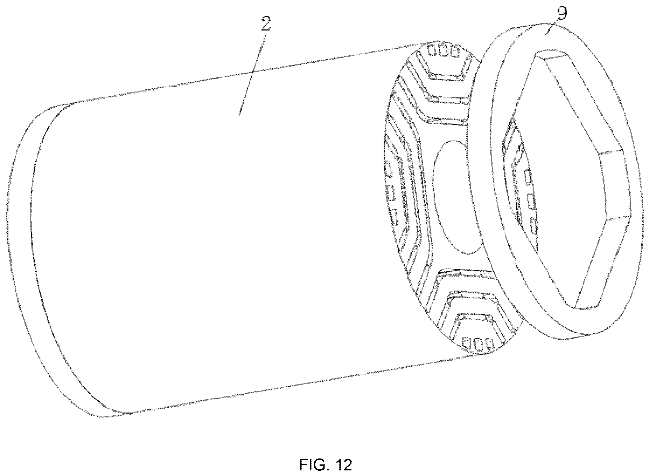

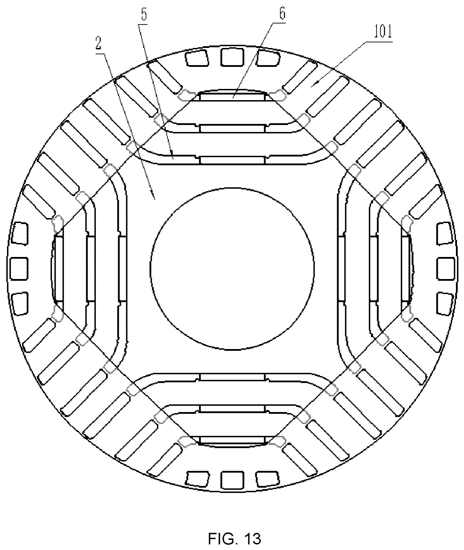

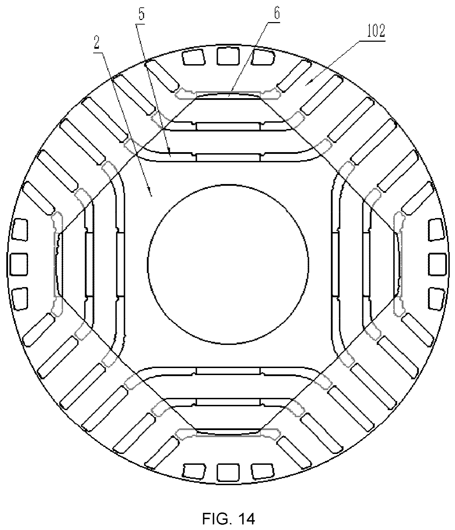

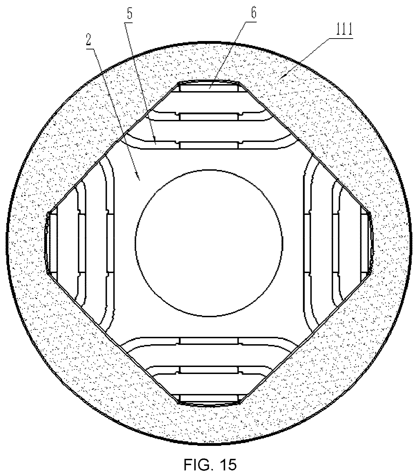

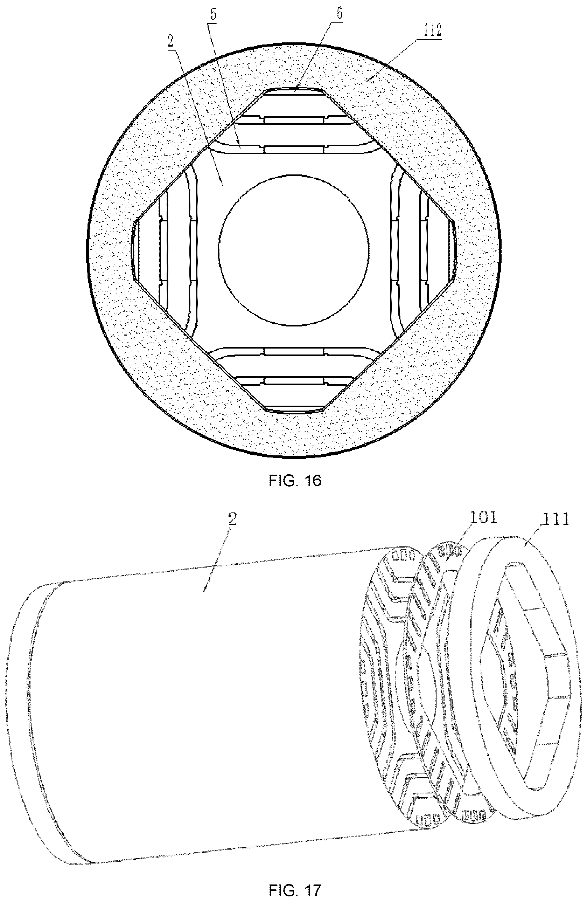

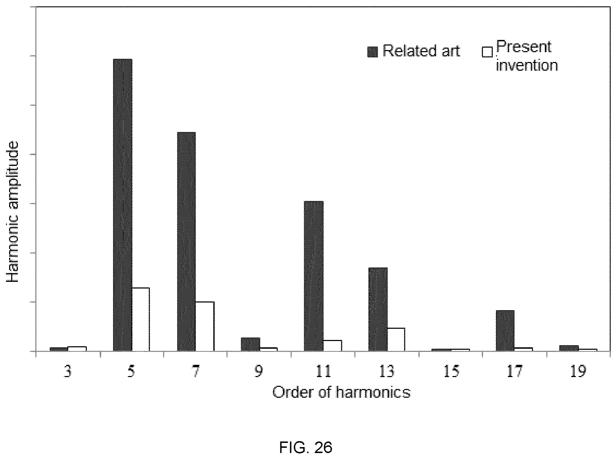

Referring to FIGS. 1 to 26, according to the embodiments of the present disclosure, a rotor structure includes: a rotor core 2, the rotor core 2 including a plurality of axially stacked magnetic laminations 3, wherein under one pole of the rotor core 2, a plurality of conductor slots 4 and multi-layer permanent magnet slots 5 are disposed, the conductor slots 4 being distributed along an outer periphery of the rotor core 2; and magnet steels 6, disposed in the permanent magnet slots 5. The rotor core 2 includes a d-axis and a q-axis, and under one pole, the d-axis is located on a symmetrical centerline of the pole, the q-axis is located on a symmetrical centerline between adjacent poles, the permanent magnet slots 5 being spaced along the d-axis, the conductor slots 4 including d-axis conductor slots 42 and q-axis conductor slots 41, the d-axis conductor slots 42 being located on a side of the magnet steels 6 close to a rotor outer circumference of the rotor core 2, the q-axis conductor slots 41 being located at two ends of each of the permanent magnet slots 5 and extending along a direction of ends of the permanent magnet slots 5 close to the q-axis conductor slots 41. In a cross-section perpendicular to a central axis of the rotor core, each of the q-axis conductor slots 41 has a length L2 along the q-axis and a width w2 perpendicular to the q-axis, with L2 gradually decreasing in a direction away from the q-axis, so that a ratio L2 / w2 gradually decreases. For at least part of the q-axis conductor slots 41, a relationship between the length L2 along the q-axis and a radius R of the rotor outer circumference satisfies: 0.15 ≤ L2 / R ≤ 0.35.

A squirrel-cage asynchronous magnetic field generated by the conductor slots has a shielding effect against a demagnetizing magnetic field of an armature windings, that is, a cage magnetic field provides protection for the magnet steels. By defining the ratio between the length of the conductor slots and the radius of the rotor outer circumference, an area of the conductor slots is able to be increased without affecting a configuration of magnetic flux paths, thereby enhancing pull-in torque and starting capability of the motor. Simultaneously, this configuration strengthens the protection of the magnet steels by the cage magnetic field, enhancing demagnetization resistance of the magnet steels. By defining the ratios between the length and width of the conductor slots, as well as between the length of the conductor slots and the radius of the rotor outer circumference, the rotor structure ensures that the conductor slots have sufficient area while allowing a proper configuration of the magnetic flux paths. Conductor slots with sufficient area are able to increase the pull-in torque of the motor and enhance the starting capability of the motor, whereas a proper configuration of the magnetic flux paths is able to avoid rotor magnetic saturation, increase the magnet steel torque and reluctance torque of the motor, and thereby improve motor efficiency.

In one embodiment, 3 ≤ L2 / w2 ≤ 7. By defining the range of L2 / w2, the ratio between the length and width of the q-axis conductor slots 41 is able to be optimized, ensuring a reasonable proportion between the length and width of the q-axis conductor slots 41. While maintaining conductor slots with sufficient area, this design enables the q-axis conductor slots 41 to form magnetic flux paths with more favorable dimensions, thereby optimizing the combined performance of the pull-in torque of the motor and the magnetic conduction capability of the magnetic flux paths, ultimately achieving improved motor efficiency.

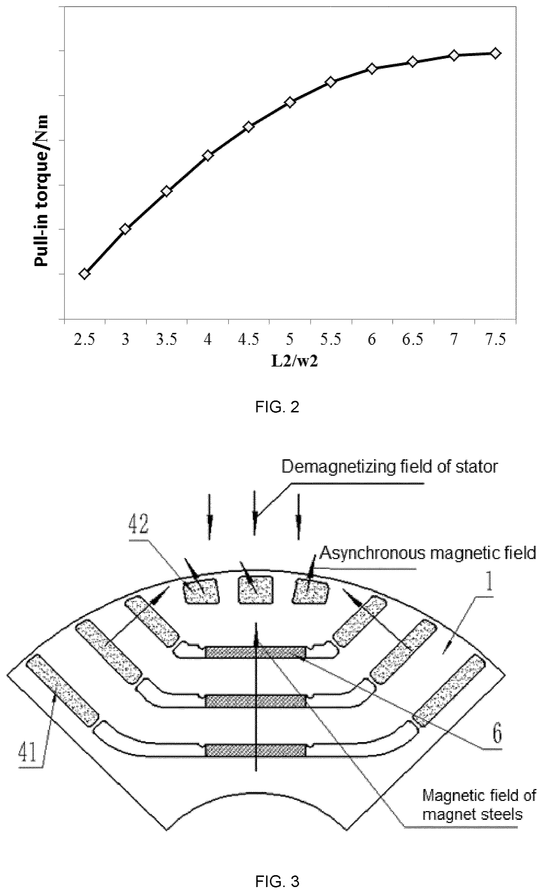

Referring to FIG. 2, a curve of a relationship between L2 / w2 and pull-in torque of a rotor structure according to an embodiment of the present disclosure is shown. Under a same operating condition, when w2 remains constant, the pull-in torque gradually increases with an increase of L2. When L2 reaches a certain value, a rate of increase of the pull-in torque significantly decreases. When the ratio L2 / w2 satisfies 3 ≤ L2 / w2 ≤ 7, a large pull-in torque is able to be obtained while reasonably configuring the conductor slots, thereby more effectively enhancing the starting capability of the motor. Referring to FIG. 2, the motor according to the embodiments of the present embodiment is more easily able to achieve synchronous stable operation.

In one embodiment, each of the magnet steels 6 has a length L1 in the direction perpendicular to the d-axis, and the length L2 of the q-axis conductor slots 41 along the q-axis has a ratio L2 / L1 = k2 with respect to the length L1 of a corresponding magnet steel 6 in a same layer in the direction perpendicular to the d-axis, with k2 gradually decreasing along the d-axis in a direction toward the rotor outer circumference.

In one embodiment, at least part of the q-axis conductor slots 41 have a length L2 along the q-axis that is greater than 0.8 times the length L1 of a corresponding magnet steel 6 in the same layer in the direction perpendicular to the d-axis. Such a configuration is able to enhance the protection of the magnet steels 6 by the cage magnetic field, using the magnetic field generated by the conductor slot structure to protect the magnet steels 6 and avoid the demagnetization of the magnet steels 6 during a starting process of the motor.

In one embodiment, each of the magnet steels 6 has a width w1 along the d-axis, and a relationship between a width w2 of the q-axis conductor slots 41 in the direction perpendicular to the q-axis and a width w1 of the corresponding magnet steel 6 in the same layer along the d-axis satisfies w2 > w1.

In one embodiment, a relationship between w1 and w2 satisfies 1.2 ≤ w2 / w1 ≤ 2.

A thickness of the q-axis conductor slots 41 is optimally designed so that the thickness of the q-axis conductor slots 41 and a thickness of the permanent magnet slots 5 fall within a specified range. This design not only ensures that the conductor slots have a sufficient area to increase the pull-in torque of the motor, but also further strengthens the protection of the magnet steels 6 by the cage magnetic field generated by the conductor slots.

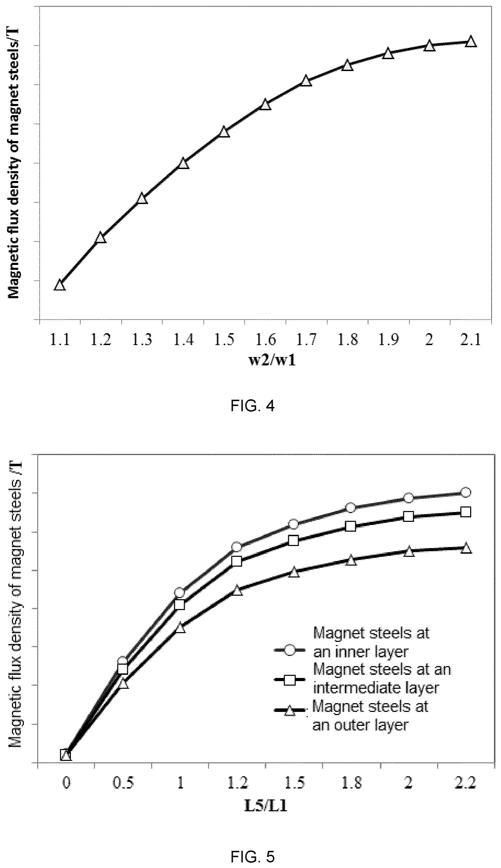

Referring to FIG. 3, a schematic diagram of improvement of magnet steel demagnetization by an asynchronous magnetic field in a rotor structure according to an embodiment of the present disclosure is shown. Referring to FIG. 4, a curve of a relationship between magnetic flux density of magnet steels and w2 / w1 in a rotor structure according to an embodiment of the present disclosure is shown. Under the same operating condition, when w1 remains constant, the remanence of magnet steels increases with an increase of w2. When w2 / w1 satisfies 1.2 ≤ w2 / w1 ≤ 2, the utilization rate of the magnet steels is able to be improved while avoiding irreversible demagnetization of the magnet steels during the starting process.

In one embodiment, a magnetic flux path between two adjacent q-axis conductor slots 41 next to the q-axis has a minimum width q1 in the direction perpendicular to the q-axis, and a minimum width of the magnetic flux paths between all adjacent q-axis conductor slots 41 on a same side of the q-axis in the direction perpendicular to the q-axis is qz, with q1 < qz.

In this embodiment, a dimension of the magnetic flux path in the direction perpendicular to the q-axis is defined as the width. In an example of three magnetic flux paths, the minimum widths of the three magnetic flux paths along the direction away from the q-axis are q1, q2, and q3, respectively, wherein q1 is less than the smaller one of the minimum widths of the other two magnetic flux paths, i.e., q1 < min(q2, q3).

Under the same pole, the widths of the magnetic flux paths in the direction perpendicular to the q-axis decrease along the direction away from the q-axis.

In an example of three magnetic flux paths, they are distinguished by a distance from the q-axis as a first magnetic flux path, a second magnetic flux path, and a third magnetic flux path, wherein the q-axis passes through the first magnetic flux path, and a minimum width q1 of the first magnetic flux path is the smallest. Among the other two magnetic flux paths apart from the first magnetic flux path, a minimum width q2 of the second magnetic flux path, which is closer to the q-axis, is greater than or equal to a minimum width q3 of the third magnetic flux path, which is farther from the q-axis, i.e., q2 ≥ q3. This configuration prevents the magnetic flux paths between the magnet steels 6 from being overloaded, thereby avoiding rotor saturation, maximizing the magnet steel torque and reluctance torque, and simultaneously reducing motor harmonics.

In one embodiment, under the same pole, a minimum width of the magnetic flux path between adjacent q-axis conductor slots 41 in the direction perpendicular to the q-axis is denoted as qn, and a minimum width of the magnetic flux path between adjacent permanent magnet slots 5 corresponding to the adjacent q-axis conductor slots 41 in the d-axis direction is denoted as dz, wherein 0.9 qn ≤ dz ≤ 1.35 qn.

In this embodiment, in an example of three magnetic flux paths, the relationship between the minimum width q2 of the second magnetic flux path and a minimum width d2 of the magnetic flux path between the two permanent magnet slots 5 corresponding to the q-axis conductor slots 41 on two sides of the second magnetic flux path satisfies 0.9 * q2 ≤ d2≤ 1.35 * q2. Similarly, the relationship between the minimum width q3 of the third magnetic flux path and a minimum width d3 of the magnetic flux path between the two permanent magnet slots 5 corresponding to the q-axis conductor slots 41 on two sides of the third magnetic flux path satisfies 0.9 * q3≤ d3 ≤1.35 * q3. The purpose of this configuration is to ensure sufficient width between the permanent magnet slots 5, so as to avoid magnetic saturation which affect magnetic flux flow through the paths between the permanent magnet slots 5 and output of the magnet steel torque.

In one embodiment, the conductor slots 4 are closed and filled with electrically conductive and non-magnetic material; and/or, in a cross-section perpendicular to the central axis of the rotor core 2, the conductor slots 4 include arc segments and/or straight segments. The conductor slots 4 are able to have a rectangular, quasi-rectangular, or irregular polygonal shape, and are intended to be filled with electrically conductive and non-magnetic material to form a cage structure, thereby enabling self-starting of the motor.

In one embodiment, under the same pole, a number of the d-axis conductor slots 42 located on the side of the magnet steels 6 close to the rotor outer circumference is at least two, and a total length L5 of all the d-axis conductor slots 42 in a direction perpendicular to the d-axis is greater than a length L1 of each of the magnet steels 6 in the direction perpendicular to the d-axis. For the d-axis conductor slot 42, a side farthest from the d-axis on the first side of the d-axis is defined as a first side edge, and a side farthest from the d-axis on the second side of the d-axis is defined as a second side edge. The total length L5 is a maximum distance between the first side edge and the second side edge in the direction perpendicular to the d-axis.

In one embodiment, 1.2 ≤ L5 / L1 ≤ 2.

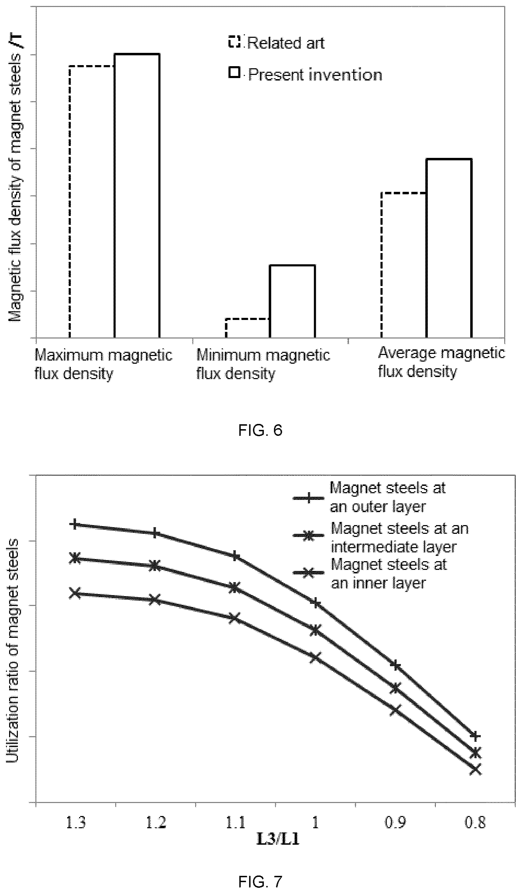

Referring to FIG. 5, a relationship curves between magnetic flux density of magnet steels in each layer and L5 / L1 in a rotor structure according to an embodiment of the present disclosure are shown. Under the same operating condition, when L1 remains constant, the remanence of magnet steels increases with an increase of L5. When L5 / L1 satisfies 1.2 ≤ L5 / L1 ≤ 2, the utilization rate of the magnet steels is able to be enhanced while avoiding irreversible demagnetization of the magnet steels during the starting process of the motor, thereby enhancing the starting demagnetization performance of the motor. Referring to FIG. 6, a comparison diagram of magnetic flux densities of magnet steels between a motor according to an embodiment of the present disclosure and a motor of the related art is shown. Under the same operating condition, the motor of the embodiments of the present disclosure is able to increase a maximum magnetic flux density and a minimum magnetic flux density of the magnet steels during the starting process and reduce a difference between the maximum magnetic flux density and the minimum magnetic flux density, thereby improving the stability of the magnet steels during the starting process.

In one embodiment, a minimum spacing between two adjacent ones of the d-axis conductor slots 42 in the direction perpendicular to the d-axis is w4, and a width of each of the magnet steels 6 along the d-axis is w1, with w4 ≥ 2w1; and/or, a relationship between a maximum width w5 of the d-axis conductor slots 42 in the d-axis and the width w1 of each of the magnet steels 6 along the d-axis satisfies w5 ≥ 2w1.

A d-axis conductor slot 42 of a certain size is not only able to enhance the starting capability of the motor but also enhance the protection of the magnet steels 6. The spacing between the d-axis conductor slots 42 ensures sufficient width for magnetic flux paths, allowing the magnetic field of part of the magnet steels 6 to enter the d-axis, thereby increasing the magnet steel torque.

In one embodiment, each layer of the permanent magnet slots 5 extends symmetrically on two sides of the d-axis toward the q-axis conductor slots 41. Each of the permanent magnet slots 5 is composed of arc segments and/or straight segments. **In** a cross-section perpendicular to the central axis of the rotor core 2, the permanent magnet slots 5 are symmetric about the d-axis. Each of the permanent magnet slots 5 includes an arc segment and/or a straight segment, and includes a middle portion perpendicular to the d-axis and two end portions parallel to the q-axis. Each of the magnet steels 6 is disposed in a middle portion of a corresponding permanent magnet slot 5, and portions of the permanent magnet slots 5 at two ends of each of the magnet steels 6 are filled with air.

In one embodiment, a width of part of the middle portion at two ends of a corresponding magnet steel 6 gradually increases, magnet steelin a direction away from the corresponding magnet steel 6, from the two ends of the corresponding magnet steel 6 toward a junction with the two end portions, to reach a width of the two end portions at the junction.

In one embodiment, the middle portion at two ends of the magnet steel 6 has a minimum width w3 along the d-axis, the magnet steel 6 has a width w1 along the d-axis, and w3 ≥ w1.

The configuration above allows a reasonable arrangement of the magnet steels and the permanent magnet slots, maximizing the use of an area of the magnetic lamination. This is able to avoid magnetic saturation, reduce the amount of magnet steel material, enhance the utilization rate of the magnet steels, and also increase the magnet steel torque and reluctance torque, thereby enhancing the torque output capability.

In one embodiment, a maximum width of the two end portions in the direction perpendicular to the q-axis is w6, that is, a maximum thickness of the air portion of the permanent magnet slot 5 is w6, wherein the relationship between w2 and w6 satisfies 0.8 w2 ≤ w6 ≤ 1.1 w2.

In one embodiment, 0.9 w2 ≤ w6 ≤ w2.

This configuration prevents the magnetic flux paths between the permanent magnet slots 5 from becoming too narrow, thereby avoiding problems of a reduction in motor output and a decrease in motor efficiency.

In one embodiment, in the direction perpendicular to the d-axis, a length of an air portion of a permanent magnet slot 5 located at an end of a corresponding magnet steel 6 gradually decreases along the d-axis toward the rotor outer circumference.

In one embodiment, in the direction perpendicular to the d-axis, the length of the air portion of the permanent magnet slot 5 located at the end of the corresponding magnet steel 6 is L3, a length of the corresponding magnet steel 6 in a same layer is L1, with L3 / L1 = k3, and k3 gradually decreases toward the rotor outer circumference.

Referring to FIG. 7, curves of a relationship between utilization rate of magnet steels in each layer and L3 / L1 in a rotor structure according to an embodiment of the present disclosure are shown. Under the same operating condition, when L1 remains constant, the utilization rate of the magnet steels decreases as L3 decreases. Compared with multi-layer magnet steels under a single pole, the outermost layer exhibits the highest utilization rate.

In one embodiment, at least part of the permanent magnet slots 5 is provided with the air portion at the end of the corresponding magnet steel 6, and the length L3 of the air portion in the direction perpendicular to the d-axis is greater than the length L1 of the corresponding magnet steel 6 in the same layer in the direction perpendicular to the d-axis.

By the restrictions above, the amount of magnet steel material is able to be reduced, and the utilization rate of the magnet steels is able to be enhanced.

In one embodiment, the length of the air portion of the permanent magnet slot 5 located at the end of the corresponding magnet steel 6 permanent magnet slotin the direction perpendicular to the d-axis is L3, and a length of a corresponding q-axis conductor slot 41 in the same layer along the q-axis direction is L2, with a ratio of L3 to L2 gradually decreasing toward the rotor outer circumference.

In one embodiment, at least a permanent magnet slot 5 in an innermost layer has an air portion at the end of the magnet steels 6 with a length L3, the length L3 is greater than the length L2 of the corresponding q-axis conductor slot 41 in the same layer along the q-axis direction.

In one embodiment, a permanent magnet slot 5 in an outermost layer along the d-axis has an air portion at the end of the corresponding magnet steel 6 with a length L3 less than the length L2 of the corresponding q-axis conductor slot 41 in the same layer along the q-axis direction.

In one embodiment, 0.35 ≤ L3 / L2 ≤ 0.8.

This configuration is able to ensure a sufficient conductor slot area to enhance the starting capability of the motor while protecting the magnet steels from demagnetization.

In one embodiment, each of the magnet steels 6 have a length L1 in the direction perpendicular to the d-axis, and a total length of a permanent magnet slot 5 in a same layer as a corresponding magnet steel 6 in the direction perpendicular to the d-axis is L4, and a ratio k4 between L1 and L4 gradually increases toward the rotor outer circumference.

In one embodiment, a ratio k4 between a length L1 of a magnet steel 6 in an innermost layer along the d-axis and a length L4 of a corresponding permanent magnet slot 5 in the same layer satisfies 0.2 ≤ k4 ≤ 0.4, and toward the rotor outer circumference, an increase ratio of k4 between adjacent layers is greater than or equal to 1.25.

The purpose of this configuration is to reduce the amount of magnet steel material and to enhance the utilization rate of the magnet steels.

In one embodiment, under the same pole, the magnet steels 6 are arranged in two or more layers, a width of a magnet steel 6 located at an outermost layer along the d-axis being greater than or equal to a width of magnet steels 6 in other layers along the d-axis, and a difference in the length L1 of the magnet steels 6 in each layer in the direction perpendicular to the d-axis is within 30%. The purpose of this configuration is to ensure that the magnet steels do not demagnetize while maintaining the amount of magnet steel material of each layer, thereby avoiding localized protection and low utilization rate of the magnet steels.

In one embodiment, a minimum distance between the magnet steel 6 at the outermost layer on the side near the rotor outer circumference and the rotor outer circumference is r1, and the radius of the rotor outer circumference is R, with 0.18 ≤ r1 / R ≤ 0.33.

In one embodiment, the q-axis conductor slot 41 has a length L2 along the q-axis, and the length L2 of the q-axis conductor slots 41 at the outermost layer on the side near the rotor outer circumference satisfies 1 < r1 / L2 < 2.

The minimum distance between the magnet steel at the outermost layer and the rotor outer circumference determines a size of the rotor end ring. Ensuring a rotor end ring of sufficient size is able to reduce pressure deformation of the rotor end ring and the rotor core during manufacturing. The rotor end ring covers the conductor slots to form a short circuit, and during the motor starting, the conductor slots generate an asynchronous torque that initiates the motor.

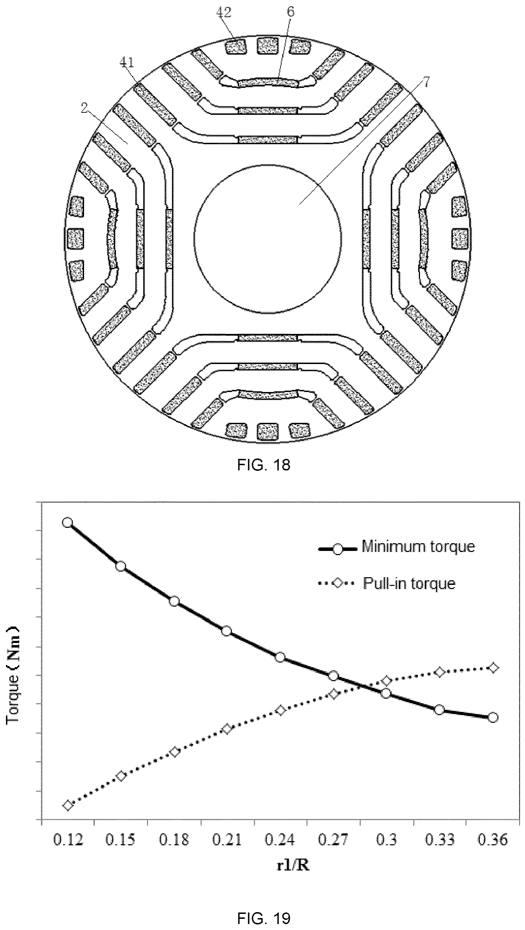

Referring to FIG. 19, curves of a relationship between minimum torque and pull-in torque with respect to r1 / R in a rotor structure according to an embodiment of the present disclosure are shown. Under the same operating condition, when R remains constant, as r1 increases, the minimum torque decreases while the pull-in torque increases. If the minimum torque is too low, the load cannot be driven; if the pull-in torque is too low, the motor may struggle to achieve synchronous operation. When r1 / R satisfies 0.18 ≤ r1 / R ≤ 0.33, motor starting and stable operation are improved, and the risk of demagnetization of the magnet steels during starting is reduced.

In one embodiment, a central portion of the magnet steel 6 at the outermost layer on the side near the rotor outer circumference projects toward the rotor outer circumference. In this embodiment, the magnet steels are rectangular or quasi-rectangular in shape. The magnet steel at the outermost layer near the rotor outer periphery is able to be shaped as an arch or an inverted V to increase the minimum distance r1 between the magnet steel at the outermost layer and the rotor outer circumference, thereby further ensuring the motor process and enhancing starting capability of the motor.

In one embodiment, a distance between a side of the conductor slot 4 close to the rotor outer circumference and the rotor outer circumference is d4, and a distance between a side of the q-axis conductor slot 41 close to a corresponding permanent magnet slot 5 and a corresponding permanent magnet slot 5 in the same layer is d5, wherein 0 < d4 ≤ 1.75 * d and 0 < d5 ≤ 1.75 * d, with d being a thickness of an air gap between a stator inner circumference and the rotor outer circumference. Such a configuration can not only ensure the mechanical strength of the rotor structure but also reduce magnetic leakage between the conductor slots and the magnet steels, thereby enhancing motor efficiency.

In one embodiment, end plates are disposed at two ends of the rotor core 2. The end plates are made of the same material as the magnetic laminations 3 of the rotor core 2, but have a different structure. Each of the end plates includes communication slots corresponding to and adapted to the conductor slots 4, the end plates covering two end portions of the permanent magnet slots 5, and an end plate of at least one end of the rotor core 2 covering a part of a magnet steels 6 at an outermost layer near the rotor outer circumference. The end plates are able to increase the minimum distance between the magnet steel at the outermost layer and the rotor outer circumference, thereby enlarging a rotor end ring area, improving motor starting performance, and avoiding demagnetization of the magnet steels.

In one embodiment, the rotor structure further includes a short-circuit end ring 9 that covers the conductor slots 4 and electrically shorts the conductor slots 4, an outer periphery of the short-circuit end ring 9 is circular, the short-circuit end ring 9 includes an inner hole formed as a polygon defined by straight segments or by straight segments and arc segments, and under the same pole, a radial width of the short-circuit end ring 9 varies at different positions from the d-axis to the q-axis, with a relationship between a minimum radial width r2 of the short-circuit end ring 9 and the radius R of the rotor outer circumference satisfying 0.14 ≤ r2 / R ≤ 0.3. This configuration is able to ensure a certain radial width of the end rings, improving the starting capability of the motor. Meanwhile, the end rings located along the d-axis also help enhance the demagnetization resistance of the motor.

In one embodiment, the rotor structure further includes a short-circuit end ring 9, end plates being disposed at two ends of the rotor core 2, the end plates being provided with communication slots corresponding to and adapted to the conductor slots 4, and the end plates covering the two end portions of the permanent magnet slots 5. An end plate at one end of the rotor core 2 covers part of the magnet steel 6 at the outermost layer near the rotor outer circumference, and an end plate at the other end of the rotor core 2 is positioned radially outside the magnet steel 6 at the outermost layer near the rotor outer circumference. The short-circuit end ring 9 is disposed on the end plate and covers the communication slots. A structure of the short-circuit end ring 9 is adapted to a structure of an end plate of a corresponding end. A relationship between the minimum radial width r2 of the short-circuit end ring 9 and the radius R of the rotor outer circumference satisfies 0.14 ≤ r2 / R ≤ 0.3, thereby ensuring the rotor structure has end rings of sufficient area, which helps improve motor starting capability and avoids demagnetization of the magnet steels.

In this embodiment, the end plates include a first end plate 101 and a second end plate 102, and the short-circuit end ring 9 includes a first end ring 111 and a second end ring 112. The first end plate 101 covers two end portions of the permanent magnet slots 5 but does not cover the magnet steels 6 at the outermost layer, so that the magnet steels 6 are entirely located outside the first end plate 101. The second end plate 102 covers the permanent magnet slots 5 as well as part of the magnet steels 6 at the outermost layer, thereby increasing the minimum distance from the magnet steels at the outermost layer to the rotor outer circumference, enlarging the rotor end ring area, improving the starting capability of the motor, and avoiding demagnetization of the magnet steels. A structure of the first end ring 111 is adapted to a structure of the first end plate 101 and fully covers the first end plate 101, while a structure of the second end ring 112 is adapted to a structure of the second end plate 102 and fully covers the second end plate 102.

In this manner, the end plates and end rings at the two ends of the rotor core 2 are able to be configured with different structures, which enhances the design flexibility and versatility of the rotor structure.

According to the embodiments of the present disclosure, the motor includes a stator structure 8 and a rotor structure 1, wherein the rotor structure 1 is the rotor structure described above, and the stator structure is sleeved over the rotor structure.

In one embodiment, the stator core is provided with a plurality of stator teeth and stator slots which are uniformly distributed in an alternating arrangement. When any d-axis centerline of the rotor structure 1 aligns with a centerline of a stator tooth of the stator structure 8, d-axis centerlines adjacent to the d-axis centerline aligned with the centerline of a stator tooth of the stator structure 8 align with the centerlines of the stator slots, while the q-axis centerlines adjacent to the d-axis centerline are staggered relative to the centerlines of the stator teeth or the centerlines of the stator slots.

By defining the relationship between the d-axis centerline and the centerlines of the stator slots and the centerlines of stator teeth, the positional relationship between the q-axis conductor slots and the stator teeth or slots are able to be adjusted, thereby reducing cogging harmonics, improving the sinusoidal quality of the current waveform, decreasing noise and harmonic losses, and enhancing motor efficiency.

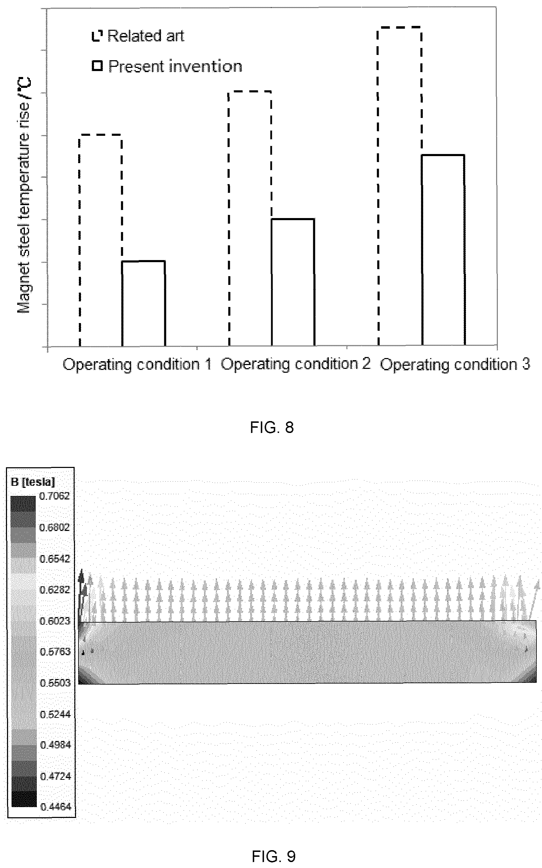

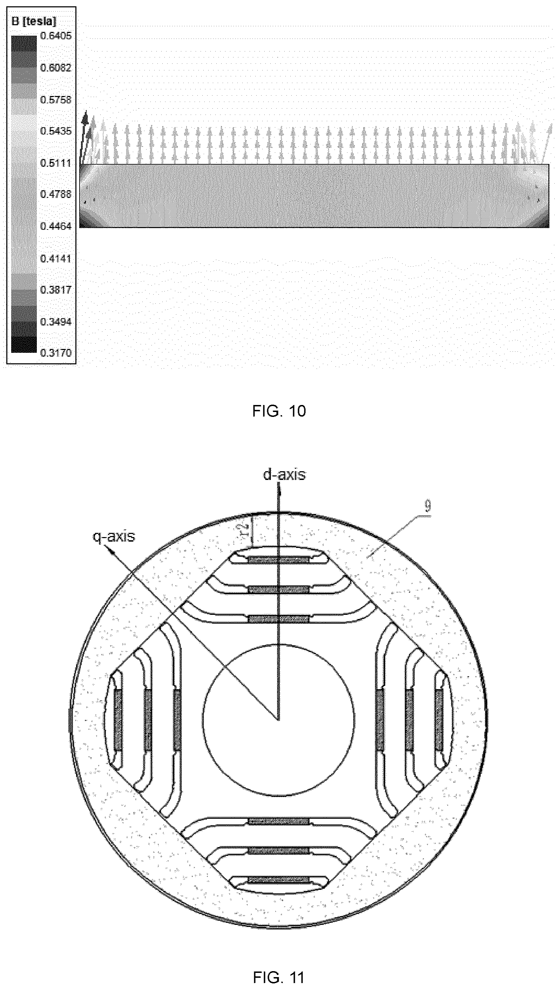

Referring to FIG. 8, a comparison diagram of temperature rise of magnet steels under different operating conditions between a motor according to an embodiment of the present disclosure and a motor of the related art is shown. Under the same operating condition, compared with the prior art, the technology of the present disclosure is able to reduce the temperature rise by at least 20%, thereby mitigating the potential problem of demagnetization of the magnet steels due to high temperatures under heavy load. Referring to FIGS. 9 and 10, the technology of the present disclosure is able to address problems such as demagnetization of the magnet steels under high temperature rise during heavy load. Referring to FIG. 9, the motor according to the technology of the present disclosure exhibits low magnetic field harmonics and eddy current losses, improved heat dissipation, during motor operation, the magnet steels have low temperature rise and magnet steelhigh magnetic flux densitymagnet steel, and enhanced demagnetization resistance of the magnet steels.

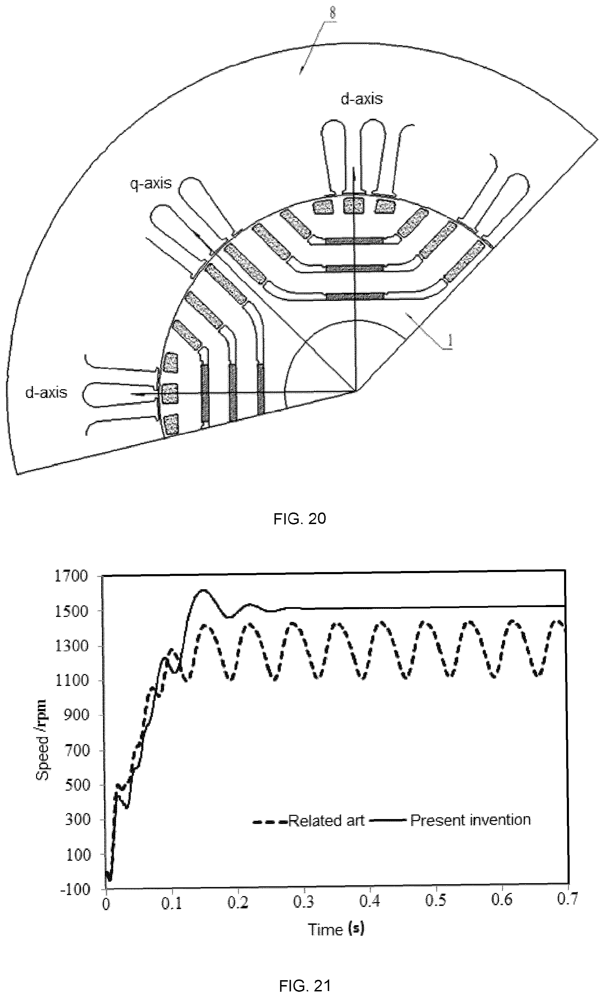

Referring to FIG. 21, a comparison diagram of rotational speeds during starting process between a motor according to an embodiment of the present disclosure and a motor of the related art is shown. **It** can be seen from the drawing that, compared with the motor of the related art, the motor of the embodiments of the present disclosure is more easily able to achieve synchronous pull-in and stable operation, exhibiting stronger starting synchronism.

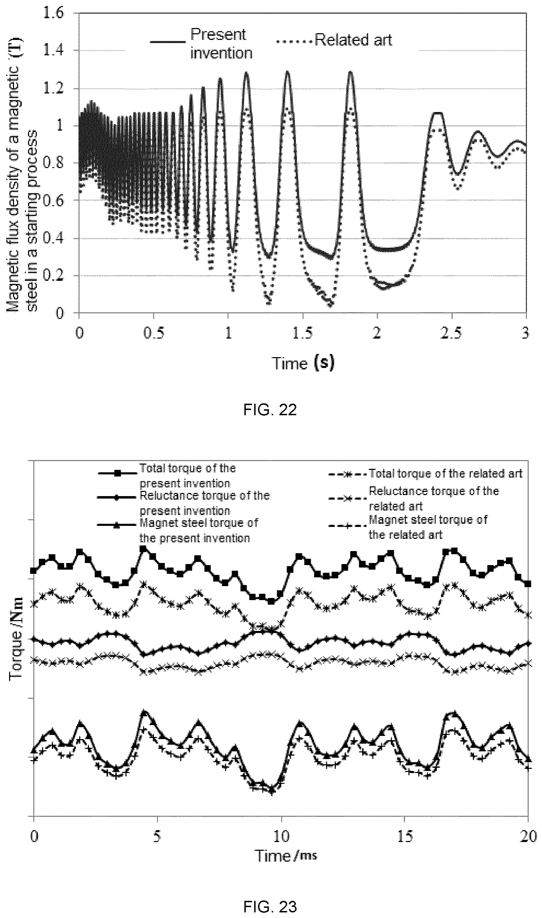

Referring to FIG. 22, a comparison diagram of magnetic flux density of magnet steels during starting process between a motor according to an embodiment of the present disclosure and a motor of the related art is shown. It can be seen from the drawing that, compared with the motor of the related art, in the motor of the embodiments of the present disclosure, the magnet steels have higher magnetic flux density and stronger demagnetization resistance.

Referring to FIG. 23, a comparison diagram of various torques between a motor according to an embodiment of the present disclosure and a motor of the related art is shown. Under the same operating condition, all torques of the motor of the present disclosure are increased compared with the prior art, resulting in higher total torque and stronger output performance.

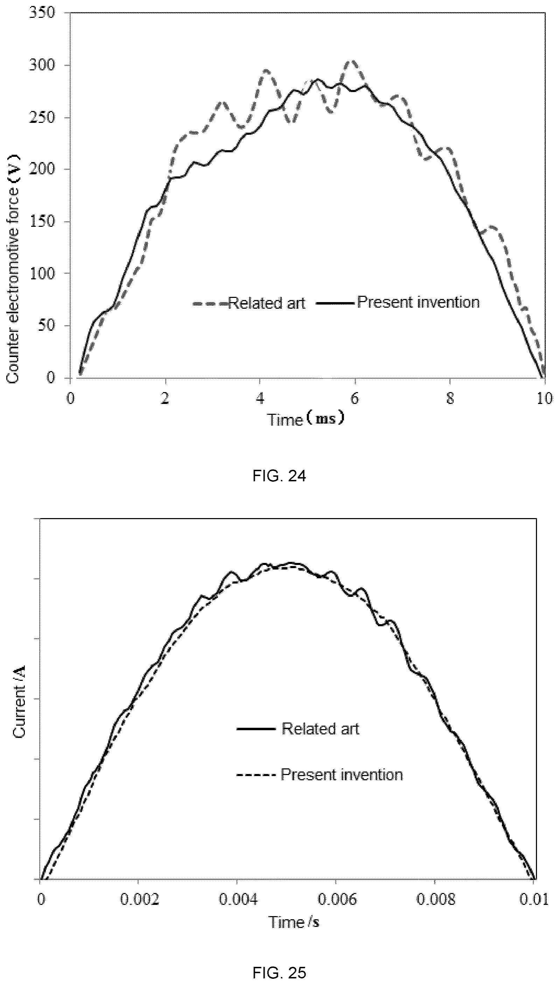

Referring to FIG. 20, a schematic diagram of a mating structure between a rotor structure and a stator structure of a motor according to an embodiment of the present disclosure is shown. FIGS. 24 to 26 show a comparison diagram of back electromotive force waveforms, a comparison diagram of current waveforms, and a comparison diagram of harmonic amplitudes between a motor according to an embodiment of the present disclosure and a motor of the related art, respectively. The technology of the present disclosure exhibits more sinusoidal back electromotive force waveforms and current waveforms with lower harmonic amplitudes, which is able to improve motor harmonics and reduce vibration and noise.

It is to be noted that the terms used herein are for describing specific embodiments only and are not intended to limit the exemplary embodiments according to the present disclosure. As used herein, unless the context clearly indicates otherwise, the singular form is also intended to comprise the plural form. In addition, it is to be understood that when the terms "include" and/or "comprise" are used in this description, the terms indicate the presence of features, steps, operations, devices, assemblies, and/or combinations thereof.

It is to be noted that the terms "first", "second", and the like in the description, claims, and drawings above of the present disclosure are used to distinguish similar objects, and are not necessarily used to describe a specific order or sequence. It is to be understood that the data used herein may be interchanged under appropriate circumstances, so that the embodiments of the present disclosure described herein can be implemented in sequences other than those illustrated or described.

The embodiments described above are merely some embodiments of the present disclosure and are not intended to limit the present disclosure. Various modifications and variations of the present disclosure can be made by those skilled in the art. Any modification, equivalent replacement, improvement, and the like made within the spirit and principle of the present disclosure shall be comprised in the scope of protection of the present disclosure.

## Claims

1. A rotor structure, comprising:
a rotor core (2), the rotor core (2) comprising a plurality of axially stacked magnetic laminations (3), wherein under one pole of the rotor core (2), a plurality of conductor slots (4) and multi-layer permanent magnet slots (5) are disposed, the conductor slots (4) being distributed along an outer periphery of the rotor core (2); and
magnet steels (6), disposed in the multi-layer permanent magnet slots (5), wherein
the rotor core (2) comprises a d-axis and a q-axis, and under one pole, the d-axis is located on a symmetrical centerline of the pole, the q-axis is located on a symmetrical centerline between adjacent poles, the multi-layer permanent magnet slots (5) being spaced along the d-axis, the plurality of conductor slots (4) comprising d-axis conductor slots (42) and q-axis conductor slots (41), the d-axis conductor slots (42) being located on a side of the magnet steels (6) close to a rotor outer circumference of the rotor core (2), the q-axis conductor slots (41) being located at two ends of each of the multi-layer permanent magnet slots (5) and extending along a direction of ends of the each of the multi-layer permanent magnet slots (5) close to the q-axis conductor slots (41); and
under the same pole, a number of the d-axis conductor slots (42) located on the side of the magnet steels (6) close to the rotor outer circumference is at least two, and a total length L5 of all the d-axis conductor slots (42) in a direction perpendicular to the d-axis is greater than a length L1 of each of the magnet steels (6) in the direction perpendicular to the d-axis, with 1.2 ≤ L5 / L1 ≤ 2.

2. The rotor structure according to claim 1, wherein a spacing between two adjacent ones of the d-axis conductor slots (42) in the direction perpendicular to the d-axis is w4, and a width of each of the magnet steels (6) along the d-axis is w1, with w4 ≥ 2w1; and/or, a relationship between a maximum width w5 of the d-axis conductor slots (42) in the d-axis and the width w1 of each of the magnet steels (6) along the d-axis satisfies w5 ≥ 2w1.

3. The rotor structure according to claim 1, wherein, under the same pole, the magnet steels (6) are arranged in two or more layers, a width of a magnet steel (6) located at an outermost layer along the d-axis being greater than or equal to a width of magnet steels (6) in other layers along the d-axis, and a difference in the length L1 of the magnet steels (6) in each layer in the direction perpendicular to the d-axis is within 30%.

4. The rotor structure according to claim 1, wherein the magnet steels (6) have a length L1 in the direction perpendicular to the d-axis, and a length L2 of the q-axis conductor slots (41) along the q-axis has a ratio L2 / L1 = k2 with respect to a length L1 of a corresponding magnet steel (6) in a same layer in the direction perpendicular to the d-axis, with k2 gradually decreasing along the d-axis in a direction toward the rotor outer circumference.

5. The rotor structure according to claim 4, wherein at least part of the q-axis conductor slots (41) have a length L2 along the q-axis that is greater than 0.8 times the length L1 of the corresponding magnet steel (6) in the same layer in the direction perpendicular to the d-axis.

6. The rotor structure according to claim 1, wherein each of the magnet steels (6) has a width w1 along the d-axis, and a relationship between a width w2 of the q-axis conductor slots (41) in the direction perpendicular to the q-axis and a width w1 of a corresponding magnet steel (6) in a same layer along the d-axis satisfies w2 > w1.

7. The rotor structure according to claim 6, wherein a relationship between w1 and w2 satisfies 1.2 ≤ w2 / w1 ≤ 2.

8. The rotor structure according to claim 1, wherein in a cross-section perpendicular to a central axis of the rotor core (2), the multi-layer permanent magnet slots (5) are symmetric about the d-axis, each of the multi-layer permanent magnet slots (5) comprises an arc segment and/or a straight segment and comprises a middle portion perpendicular to the d-axis and two end portions parallel to the q-axis, each of the magnet steels (6) is disposed in a middle portion of a corresponding permanent magnet slot (5), and portions of the corresponding permanent magnet slot (5) at two ends of each of the magnet steels (6) are filled with air.

9. The rotor structure according to claim 8, wherein a width of part of the middle portion at two ends of a corresponding magnet steel (6) gradually increases from two ends of the corresponding magnet steel (6) in a direction away from the corresponding magnet steel (6) toward a junction with the two end portions to reach a width of the two end portions at the junction; and/or, a width of the middle portion along the d-axis is w3, and a width of the corresponding magnet steel (6) along the d-axis is w1, with w3 ≥ w1.

10. The rotor structure according to claim 8, wherein in the direction perpendicular to the d-axis, a length of an air portion of a permanent magnet slot (5) located at an end of a corresponding magnet steel (6) permanent magnet slotgradually decreases along the d-axis toward the rotor outer circumference.

11. The rotor structure according to claim 10, wherein in the direction perpendicular to the d-axis, the length of the air portion of the permanent magnet slot (5) located at the end of the corresponding magnet steel (6)permanent magnet slot is L3, a length of the corresponding magnet steel (6) in a same layer is L1, with L3 / L1 = k3, and k3 gradually decreases toward the rotor outer circumference.

12. The rotor structure according to claim 11, wherein at least part of the multi-layer permanent magnet slots (5) are provided with the air portion at the end of the corresponding magnet steel (6), and the length L3 of the air portion in the direction perpendicular to the d-axis is greater than the length L1 of the corresponding magnet steel (6) in the same layer in the direction perpendicular to the d-axis.

13. The rotor structure according to claim 1, wherein a total length of a permanent magnet slot (5) in a same layer as a corresponding magnet steel (6) in the direction perpendicular to the d-axis is L4, and a ratio k4 between L1 and L4 gradually increases toward the rotor outer circumference.

14. The rotor structure according to claim 13, wherein a ratio k4 between a length L1 of a magnet steel (6) in an innermost layer along the d-axis and a length L4 of a corresponding permanent magnet slot (5) in the same layer satisfies 0.2 ≤ k4 ≤ 0.4, and toward the rotor outer circumference, an increase ratio of k4 between adjacent layers is greater than or equal to 1.25.

15. The rotor structure according to claim 1, wherein a minimum distance between a magnet steel (6) at an outermost layer on a side near the rotor outer circumference and the rotor outer circumference is r1, and a radius of the rotor outer circumference is R, with 0.18 ≤ r1 / R ≤ 0.33.

16. The rotor structure according to claim 15, wherein each of the q-axis conductor slots (41) has a length L2 along the q-axis, and a length L2 of a q-axis conductor slot (41) at the outermost layer on the side near the rotor outer circumference satisfies 1 < r1 / L2 < 2.

17. The rotor structure according to claim 1, wherein a central portion of a magnet steel (6) at an outermost layer on a side near the rotor outer circumference projects toward the rotor outer circumference.

18. The rotor structure according to claim 1, wherein end plates are disposed at two ends of the rotor core (2), each of the end plates having communication slots corresponding to and adapted to the conductor slots (4), the end plates covering two end portions of the multi-layer permanent magnet slots (5), and an end plate of at least one end of the rotor core (2) covering a part of a magnet steel (6) at an outermost layer near the rotor outer circumference.

19. The rotor structure according to claim 1, wherein the rotor structure further comprises a short-circuit end ring (9) that covers the conductor slots (4) and electrically shorts the conductor slots (4), an outer periphery of the short-circuit end ring (9) is circular, the short-circuit end ring (9) comprises an inner hole formed as a polygon defined by straight segments or by straight segments and arc segments, and under the same pole, a radial width of the short-circuit end ring (9) varies at different positions from the d-axis to the q-axis, with a relationship between a minimum radial width r2 of the short-circuit end ring (9) and a radius R of the rotor outer circumference satisfying 0.14 ≤ r2 / R ≤ 0.3.

20. The rotor structure according to claim 1, wherein the rotor structure further comprises a short-circuit end ring (9), end plates being disposed at two ends of the rotor core (2), the end plates being provided with communication slots corresponding to and adapted to the conductor slots (4), and the end plates covering the two end portions of the multi-layer permanent magnet slots (5); wherein an end plate at one end of the rotor core (2) covers part of a magnet steel (6) at an outermost layer near the rotor outer circumference, and an end plate at the other end of the rotor core (2) is positioned radially outside the magnet steel (6) at the outermost layer near the rotor outer circumference; and the short-circuit end ring (9) is disposed on the end plate and covers the communication slots, a structure of the short-circuit end ring (9) is adapted to a structure of an end plate of a corresponding end, and a relationship between the minimum radial width r2 of the short-circuit end ring (9) and a radius R of the rotor outer circumference satisfies 0.14 ≤ r2 / R ≤ 0.3.

21. A motor, comprising a stator structure (8) and the rotor structure (1) according to any one of claims 1 to 20, and the stator structure is sleeved over the rotor structure.
